# EUROPEAN PATENT SPECIFICATION

(11) **EP 3 181 915 B1**
(45) Date of publication and mention of the grant of the patent: **09.10.2019**
(21) Application number: 15199773.1
(22) Date of filing: 14.12.2015
(51) Int. Cl.: F16B 2/10

(54) **ADJUSTABLE FIXTURE FOR CLAMPING A TUBE-LIKE OBJECT**
VERSTELLBARE SPANNVORRICHTUNG ZUR KLEMMUNG EINES ROHRFÖRMIGEN OBJEKTS
DISPOSITIF RÉGLABLE PERMETTANT DE SERRER UN OBJET TUBULAIRE

(43) Date of publication of application: 21.06.2017
(73) Proprietor: Hung, Cheng-Ching, Taoyuan City (TW)
(72) Inventor: Hung, Cheng-Ching, Taoyuan City (TW)
(74) Representative: Gee, Steven William

(56) References cited:
- FR-A1- 2 270 472
- US-A1- 2006 179 969
- US-A1- 2012 084 945

## Description

### BACKGROUND OF THE INVENTION

### 1. Field of the Invention

The present invention relates generally to an adjustable fixture, and more particularly to an adjustable fixture that is adapted to clamp a tube-like object regardless of variation in the dimension.

### 2. The Prior Arts

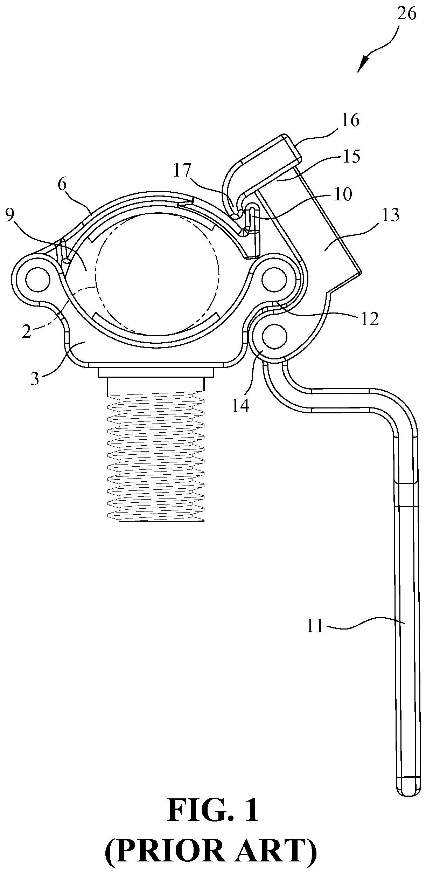

Fig. 1 illustrates a conventional fixture 26 for clamping a tube-like object 2. The conventional fixture 26 includes a lower clamp piece 3; an upper clamp piece 6 pivoted to and covering the lower clamp piece 3 in a closed position to define a clamping space 9 for receiving the tube-like object 2 and having an opposing hook edge 10 projecting outward; a torque rod 11 having a first end 12 pivoted to the lower clamp piece 3; a traction element 13 having a first traction end 14 pivoted to the torque rod 11 adjacent to the first end 12; and a hook 16 disposed on a second traction end 15 of the traction element 13 such that when it is desired to clamp the tube-like object 2, the latter is firstly disposed in the clamping space 9, after which a second end of the torque rod 11 is pivoted and pressed downward relative to the lower clamp piece 3 which action results in engagement of a barbed end 17 of the hook 16 relative to the opposing hook edge 10 of the upper clamp piece 6, thereby preventing the upper clamp piece 6 to pivot back to an open position. In other words, the tube-like object 2 is clamped securely in the clamping space 9 of the conventional fixture 26.

One drawback of the conventional fixture 26 resides in that only a tube-like object 2 of a specific dimension can be clamped within the clamping space, thereby restricting the utility range of the conventional fixture 26.

Hence, there exists an unfavorable problem regarding the utility of the conventional fixture 26.

Another fixture for clamping a tube-like object is known from US 2006/0179969 A1.

### SUMMARY OF THE INVENTION

A primary objective of the present invention is to provide an adjustable fixture that is adapted to clamp a tube-like object regardless of variation in the dimension.

An adjustable fixture of the present invention for clamping a tube-like object regardless of variation in the dimension, includes: a lower clamp piece of generally semi-circle shape having first and second lateral sides opposite to each other; an upper clamp piece of generally semi-circle shape having third and fourth lateral sides opposite to each other, wherein the third lateral side is connected pivotally to the second lateral side of the lower clamp piece such that the upper clamp piece is pivotable relative to the lower clamp piece between a closed position, where the upper clamp piece covers the lower clamp piece to define a clamping space therebetween, and an open position, where the lower clamp piece is uncovered by the upper clamp piece, the upper clamp piece further having an opposing hook edge projecting outwardly from the fourth lateral side; a torque rod having a first end pivoted to the first lateral side of the lower clamp piece; a traction element having a first traction end pivoted to the torque rod adjacent to the first end thereof and a second traction end that is opposite to the first traction end and that defines a threaded through hole, the traction element including a threaded bolt disposed threadedly and movably in the threaded through hole; and a hook disposed on the second traction end of the traction element and operably associated so as to be movable together with the threaded bolt in such a manner to engage the hook with the opposing hook edge of the upper clamp piece when the upper clamp piece is disposed in the closed position, thereby preventing the upper clamp piece from pivoting back to the open position characterised in that the second traction end of the traction element defines three threaded through holes respectively receiving three threaded bolts therein, each of the threaded bolts having a bolt head, and in that three threaded nuts respectively are threadedly fastened to the threaded bolts while the hook defines three sleeve holes respectively sleeved around the corresponding threaded bolts in such a manner that the hook is secured between adjacent pairs of the bolt heads and the threaded nuts, thereby preventing wobbling of the hook relative to the threaded bolts and providing additional engagement of the hook with respect to the threaded bolts.

In one embodiment of the present invention, the adjustable fixture further includes a bottom seat with external threads extending downwardly from the lower clamping piece for fastening onto a stationary foundation.

In one embodiment of the present invention, the adjustable fixture further includes lower and upper cushion pads configured to be mounted on inner surfaces of the lower and upper clamping pieces.

Preferably, a hinge is provided for connecting pivotally the third lateral side of the upper clamp piece to the second lateral side of the lower clamp piece, or for connecting pivotally the first end of the torque rod to the first lateral side of the lower clamp piece or for connecting pivotally the first traction end of the traction element to the torque rod adjacent to the first end thereof.

Preferably, in this embodiment, the traction element is generally L-shaped and extends toward the upper clamp piece when the latter is in the closed position. The torque rod has a first rod section being bent 90 degrees in a first direction and a second rod section being bent 90 degrees in a second direction opposite to the first direction.

One distinct feature of the present invention is that regardless of variation in the dimension of tube-like object, the adjustable fixture fabricated according to the present invention is capable of clamping the object of different dimensions therein.

### BRIEF DESCRIPTION OF THE DRAWINGS

The present invention will be apparent to those skilled in the art by reading the following detailed description of a preferred embodiment thereof, with reference to the attached drawings, in which:
Fig. 1 illustrates a lateral side view of a conventional fixture for clamping a tube-like object;
Fig. 2 illustrates a perspective view of an adjustable fixture of the present invention for clamping a tube-like object in a closed position;
Fig. 3 illustrates a perspective view of the adjustable fixture of the present invention for clamping a tube-like object in an open position;
Fig. 4 illustrates a perspective view of the adjustable fixture of the present invention in an open position after adjustment;
Fig. 5 illustrates the adjustable fixture of the present invention clamping a tube-like object; and
Fig. 6 illustrates a lateral side view of the adjustable fixture of the present invention clamping a tube-like object.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

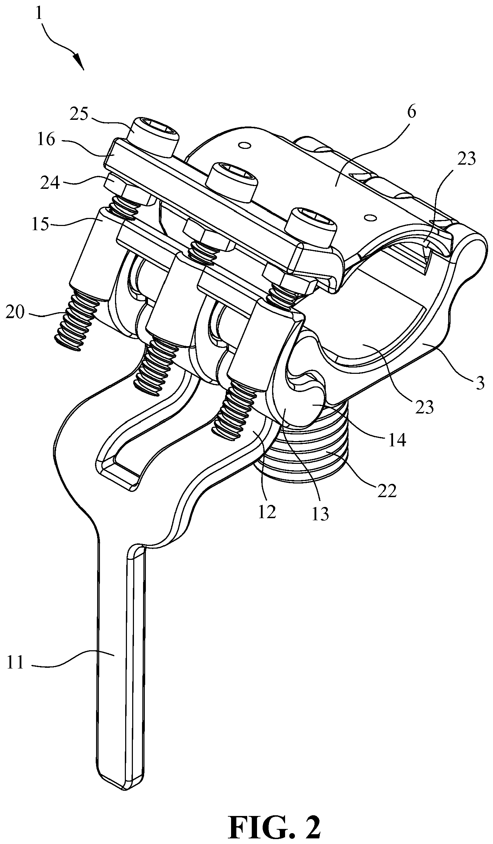

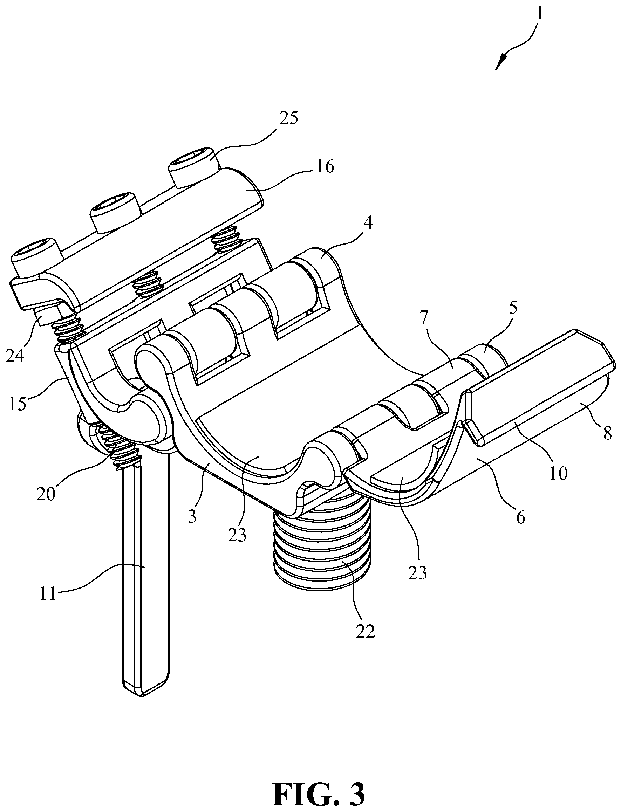

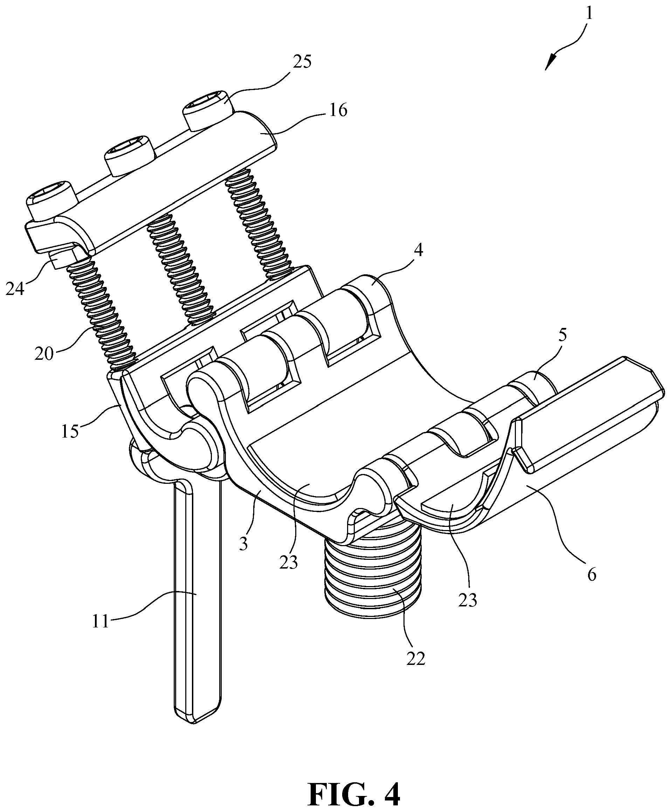

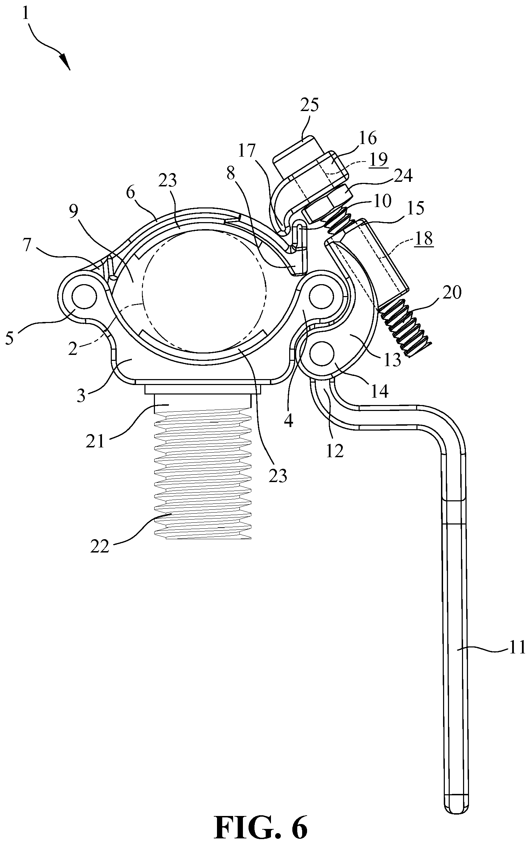

Referring to Figs. 2 to 4, wherein Fig. 2 illustrates a perspective view of an adjustable fixture 1 of the present invention for clamping a tube-like object 2 in a closed position; Fig. 3 illustrates a perspective view of the adjustable fixture 1 of the present invention for clamping a tube-like object in an open position; and Fig. 4 illustrates a perspective view of the adjustable fixture 1 of the present invention in an open position after adjustment. As illustrated, the adjustable fixture 1 according to the present invention includes a lower clamp piece 3 of generally semi-circle shape having first and second lateral sides 4, 5 opposite to each other; an upper clamp piece 6 of generally semi-circle shape having third and fourth lateral sides 7, 8 opposite to each other, wherein the third lateral side 7 is connected pivotally to the second lateral side 5 of the lower clamp piece 3 such that the upper clamp piece 6 is pivotable relative to the lower clamp piece 3 between a closed position (see Fig. 2), where the upper clamp piece 6 covers the lower clamp piece 3 to define a clamping space 9 (see Fig. 6) therebetween, and an open position, where the lower clamp piece 3 is uncovered by the upper clamp piece 6 (see Fig. 3), the upper clamp piece 6 further having an opposing hook edge 10 projecting outward from the fourth lateral side 8; a torque rod 11 having a first end 12 pivoted to the first lateral side 4 of the lower clamp piece 3; a traction element 13 having a first traction end 14 pivoted to the torque rod 11 adjacent to the first end 12 thereof and a second traction end 15 that is opposite to the first traction end 14 and that defines a threaded through hole 18, the traction element 13 including a threaded bolt 20 disposed threadedly and movably in the threaded through hole 18; and a hook 16 disposed on the second traction end 15 of the traction element 13 and operably associated so as to be movable together with the threaded bolt 20 in such a manner to engage a barbed end 17 of the hook 16 with the opposing hook edge 10 of the upper clamp piece 6 when the upper clamp piece 6 is disposed at the closed position, thereby preventing the upper clamp piece 6 to pivot back to the open position. It is to be noted that the configuration or shape of the upper and lower clamp pieces 6, 3 or the clamping space 9 should not be restricted only to the disclosed ones, any other configuration or shape should be included within the scope of the present invention as defined by the appended claims.

In one embodiment of the present invention, the adjustable fixture 1 further includes a bottom seat 21 (see Fig. 6) with external threads 22 extending downwardly from the lower clamping piece 3 for fastening onto a stationary foundation (not visible).

In one embodiment of the present invention, the lower clamping piece 3 further includes another adjustable fixture 1 such that two tubes 2 of different dimensions (not visible) can be clamped by two adjustable fixtures 1 according to the present invention so as to fix the tubes 2 stationarily within a working site (not shown). In other words, the adjustable fixture 1 of the present invention serves as a universal joint for fixing two pipes together, as in the plumbing of a factory.

In one embodiment of the present invention, a lower part of the lower clamp piece 3 of the adjustable fixture 1 according to the present invention can be fixed to an external part of an ordinary wheeled chair (not shown). To be more specific, the lower part of the lower clamp piece 3 of the adjustable fixture 1 is fastened securely on a front part of the wheeled chair, after which a rear part of a tractor (not shown) is disposed in the clamping space of the adjustable fixture 1 such that when the tractor travels in the forward direction, the wheeled chair will be pulled along behind the tractor (not visible).

Alternately, a lower part of the lower clamp piece 3 of the adjustable fixture 1 can be fixed on a tractor (not visible), after which a wheeled chair to be pulled is fastened to the clamping space of the adjustable fixture 1 such that the wheeled chair will be pulled when the tractor is driven forward.

Preferably, the adjustable fixture 1 of the present invention further includes lower and upper cushion pads 23 configured to be mounted on inner surfaces of the lower and upper clamping pieces 3, 6 so as to provide additional friction force between the adjustable fixture of the present invention and an object being clamped.

One aspect to note is that the object 2 to be clamped in the adjustable fixture 1 of the present invention should not be limited only to the tube-like object, any other geometric configuration should also be clamped in the adjustable fixture 1 of the present invention.

In this embodiment, a hinge is provided for connecting pivotally the third lateral side 7 of the upper clamp piece 6 to the second lateral side 5 of the lower clamp piece 3, or for connecting pivotally the first end 12 of the torque rod 11 to the first lateral side 4 of the lower clamp piece 3 or for connecting pivotally the first traction end 14 of the traction element 13 to the torque rod 11 adjacent to the first end 12 thereof.

Preferably, the traction element 13 is generally L-shaped and extends toward the upper clamp piece 6 (see Fig. 2) when in the closed position.

Preferably, in this embodiment, the torque rod 11 has a rod section being bent 90 relative to the upper clamp piece 6 in a first direction and another rod section being bent relative to the upper clamp piece 6 in a second direction opposite to the first direction.

Referring to Figs. 3, 5 and 6, according to the present invention, the second traction end 15 of the traction element 13 defines three threaded through holes 18 respectively receiving three threaded bolts 20 therein. Each of the threaded bolts 20 has a bolt head 25. The adjustable fixture 1 according this embodiment includes three threaded nuts 24 respectively and threadedly fastened to the threaded bolts 20 while the hook 16 is formed with three sleeve holes 19 respectively sleeved around the corresponding threaded bolt 20 in such a manner that the hook 16 is secured between adjacent pairs of the bolt heads 25 and the threaded nuts 24, thereby preventing wobbling of the hook 16 relative to the threaded bolts 20 and providing additional engagement of the hook 16 with respect to the threaded bolts 20.

Fig. 3 illustrates a perspective view of the adjustable fixture 1 of the present invention for clamping a tube-like object in an open position, wherein the opposing hook edge 10 of the upper clamp piece 6 is disengaged from the barbed end 17 of the hook 16.

Fig. 4 illustrates a perspective view of the adjustable fixture of the present invention in an open position after adjustment. In case the object to be clamped is not compatible with the clamping space 9, the dimension of the clamping space 9 can be varied by moving the hook 16 along the threaded bolts 20, after which, the position of the hook 16 relative to the threaded bolts 20 can be fixed securely by adjacent pairs of the bolt heads 25 and the threaded nuts 24.

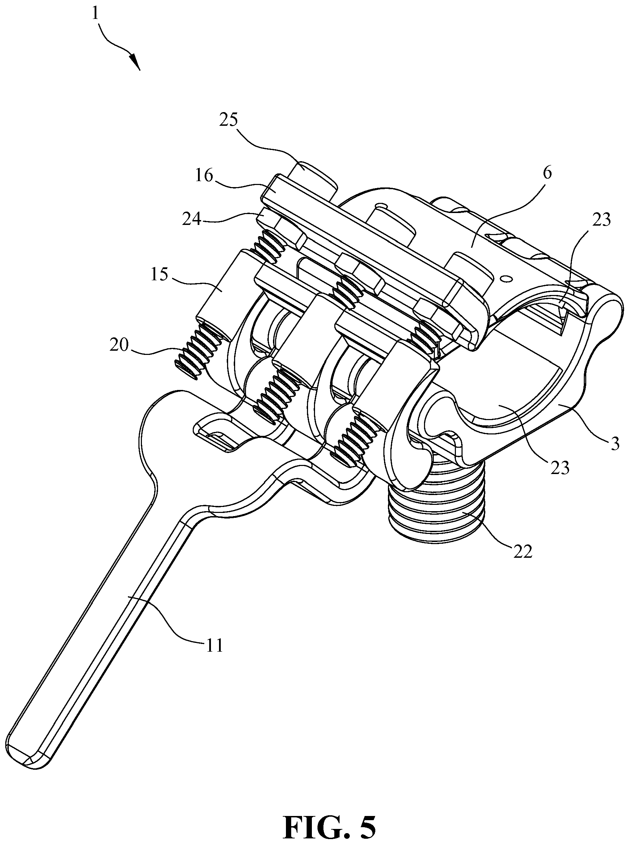

As explained above, after adjustment of the clamping space 9 as shown in Fig. 4 and in case it is desired to clamp an object, the upper clamp piece 6 is pivoted relative to the lower clamp piece 3 to a closed position first of all. After which, the torque rod 11 is pivoted relative to the lower clamp piece 3, as best shown in Fig. 5, where the hook 16 does not engage the opposing hook edge 10 of the upper clamp piece 6 due to being stopped midway of the pivotal action and wherein the barbed end 17 of the hook 16 engages the opposing hook edge 10 of the upper clamp piece 6 after the torque rod 11 is pivoted fully relative to the lower clamp piece 3, as best shown in Fig. 6. Under this condition, the tube-like object 2 is clamped securely within the clamping space 9 of the adjustable fixture 1 of the present invention.

Although the present invention has been described with reference to the preferred embodiments thereof, it is apparent to those skilled in the art that a variety of modifications and changes may be made without departing from the scope of the present invention which is intended to be defined by the appended claims.

## Claims

1. An adjustable fixture (1) for clamping a tube-like object therein regardless of variation in the dimension, comprising:
a lower clamp piece (3) of generally semi-circle shape having first and second lateral sides (4,5) opposite to each other;
an upper clamp piece (6) of generally semi-circle shape having third and fourth lateral sides (7,8) opposite to each other, wherein the third lateral side (7) is connected pivotally to the second lateral side (5) of the lower clamp piece (3) such that the upper clamp piece (6) is pivotable relative to the lower clamp piece (3) between a closed position, where the upper clamp piece (6) covers the lower clamp piece (3) to define a clamping space (9) therebetween, and an open position, where the lower clamp piece (3) is uncovered by the upper clamp piece (6), the upper clamp piece (6) further having an opposing hook edge (10) projecting outwardly from the fourth lateral side (8);
a torque rod (11) having a first end (12) pivoted to the first lateral side (4) of the lower clamp piece (3);
a traction element (13) having a first traction end (14) pivoted to the torque rod (11) adjacent to the first end (12) thereof and a second traction end (15) that is opposite to the first traction end (14) and that defines a threaded through hole (18), the traction element (13) including a threaded bolt (20) disposed threadedly and movably in the threaded through hole (18); and
a hook (16) disposed on the second traction end (15) of the traction element (13) and operably associated so as to be movable together with the threaded bolt (20) in such a manner to engage the hook (16) with the opposing hook edge (10) of the upper clamp piece (6) when the upper clamp piece (6) is disposed in the closed position, thereby preventing the upper clamp piece (6) from pivoting back to the open position,
**characterised in that** the second traction end (15) of the traction element (13) defines three threaded through holes (18) respectively receiving three threaded bolts (20) therein, each of the threaded bolts (20) having a bolt head (25),
and **in that** three threaded nuts (24) respectively are threadedly fastened to the threaded bolts (20) while the hook (16) defines three sleeve holes (19) respectively sleeved around the corresponding threaded bolts (20) in such a manner that the hook (16) is secured between adjacent pairs of the bolt heads (25) and the threaded nuts (24), thereby preventing wobbling of the hook (16) relative to the threaded bolts (20) and providing additional engagement of the hook (16) with respect to the threaded bolts (20).

2. The adjustable fixture (1) according to claim 1, **characterised in that** a bottom seat (21) with external threads (22) extends downwardly from the lower clamping piece (3) for fastening onto a stationary foundation.

3. The adjustable fixture (1) according to claim 1, **characterised in that** lower and upper cushion pads (23) are configured to be mounted on inner surfaces of the lower and upper clamping pieces (3,6).

4. The adjustable fixture (1) according to claim 1, **characterised in that** a hinge is provided for connecting pivotally the third lateral side (7) of the upper clamp piece (6) to the second lateral side (5) of the lower clamp piece (3), or for connecting pivotally the first end (12) of the torque rod (11) to the first lateral side (4) of the lower clamp piece (3) or for connecting pivotally the first traction end (14) of the traction element (13) to the torque rod (11) adjacent to the first end (12) thereof.

5. The adjustable fixture (1) according to claim 1, **characterised in that** the traction element (13) is generally L-shaped and extends toward the upper clamp piece (6) when in the closed position, the torque rod (11) having a first rod section being bent 90 degrees in a first direction and a second rod section being bent 90 degrees in a second direction opposite to the first direction.

## Patentansprüche

1. Verstellbare Vorrichtung (1) zum Einspannen eines rohrförmigen Objekts darin unabhängig von der Änderung der Abmessung, umfassend:
ein unteres Klemmstück (3) von im Allgemeinen halbkreisförmiger Form mit einer ersten und zweiten Seitenfläche (4, 5), die einander gegenüberliegen;
ein oberes Klemmstück (6) von im Allgemeinen halbkreisförmiger Form mit einer dritten und vierten Seitenfläche (7, 8), die einander gegenüberliegen, wobei die dritte Seitenfläche (7) schwenkbar mit der zweiten Seitenfläche (5) des unteren Klemmstücks (3) verbunden ist, so dass das obere Klemmstück (6) in Bezug auf das untere Klemmstück (3) zwischen einer geschlossenen Position schwenkbar ist, wobei das obere Klemmstück (6) das untere Klemmstück (3) abdeckt, um einen Klemmraum (9) dazwischen und eine offene Position zu definieren, wobei das untere Klemmstück (3) durch das obere Klemmstück (6) freigelegt wird, wobei das obere Klemmstück (6) weiterhin eine gegenüberliegende Hakenleiste (10) aufweist, die von der vierten Seitenfläche (8) nach außen ragt;
eine Drehmomentstange (11) mit einem ersten Ende (12), das an der ersten Seitenfläche (4) des unteren Klemmstücks (3) geschwenkt wird;
ein Zugelement (13) mit einem ersten Zugende (14), das an der Drehmomentstange (11) angrenzend an das erste Ende (12) desselben geschwenkt wird, und einem zweiten Zugende (15), das dem ersten Zugende (14) gegenüberliegt und ein Durchgangsloch mit Gewinde (18) definiert, wobei das Zugelement (13) einen Gewindebolzen (20) aufweist, der in dem Durchgangsloch mit Gewinde (18) gewindemäßig und beweglich angeordnet ist; und
einen Haken (16), der am zweiten Zugende (15) des Zugelements (13) angeordnet und funktionsfähig verbunden so zugeordnet ist, dass er zusammen mit dem Gewindebolzen (20) beweglich ist, um in den Haken (16) mit der gegenüberliegenden Hakenkante (10) des oberen Klemmstücks (6) einzugreifen, wenn das obere Klemmstück (6) in der geschlossenen Position angeordnet ist, wodurch verhindert wird, dass das obere Klemmstück (6) in die offene Position zurückschwenkt,
**dadurch gekennzeichnet, dass** das zweite Zugende (15) des Zugelements (13) drei Durchgangslöcher mit Gewinde (18) definiert, die jeweils drei Gewindebolzen (20) aufnehmen, wobei jeder der Gewindebolzen (20) einen Schraubenkopf (25) aufweist,
und dass jeweils drei Gewindemuttern (24) mit Gewinde an den Gewindebolzen (20) befestigt sind, während der Haken (16) drei Durchführungsöffnungen (19) definiert, die jeweils um die entsprechenden Gewindebolzen (20) herum gesteckt sind, so dass der Haken (16) zwischen benachbarten Paaren der Schraubenköpfe (25) und den Gewindemuttern (24) befestigt ist, wodurch ein Wackeln des Hakens (16) in Bezug auf die Gewindebolzen (20) verhindert wird und ein zusätzliches Eingreifen des Hakens (16) in Bezug auf die Gewindebolzen (20) vorgesehen wird.

2. Verstellbare Vorrichtung (1) nach Anspruch 1, **dadurch gekennzeichnet, dass** sich ein Bodensitz (21) mit Außengewinden (22) vom unteren Klemmstück (3) nach unten zur Befestigung auf einem stationären Fundament erstreckt.

3. Verstellbare Vorrichtung (1) nach Anspruch 1, **dadurch gekennzeichnet, dass** untere und obere Kissenpolster (23) so ausgebildet sind, dass sie an den Innenflächen der unteren und oberen Klemmstücke (3, 6) montiert werden können.

4. Verstellbare Vorrichtung (1) nach Anspruch 1, **dadurch gekennzeichnet, dass** ein Scharnier zum schwenkbaren Verbinden der dritten Seitenfläche (7) des oberen Klemmstücks (6) mit der zweiten Seitenfläche (5) des unteren Klemmstücks (3) oder zum schwenkbaren Verbinden des ersten Endes (12) der Drehmomentstange (11) mit der ersten Seitenfläche (4) des unteren Klemmstücks (3) oder zum schwenkbaren Verbinden des ersten Zugendes (14) des Zugelements (13) mit der Drehmomentstange (11) angrenzend an dessen erstes Ende (12) vorgesehen ist.

5. Verstellbare Vorrichtung (1) nach Anspruch 1, **dadurch gekennzeichnet, dass** das Zugelement (13) im Allgemeinen L-förmig ist und sich in der geschlossenen Position in Richtung des oberen Klemmstücks (6) erstreckt, wobei die Drehmomentstange (11) einen ersten Stababschnitt aufweist, der um 90 Grad in eine erste Richtung gebogen ist und einen zweiten Stababschnitt um 90 Grad in eine zweite Richtung entgegen der ersten Richtung gebogen ist.

## Revendications

1. Fixation réglable (1) pour serrer un objet en forme de tube à l'intérieur, indépendamment de la variation de la dimension, comprenant :
une pièce de serrage inférieure (3) de forme généralement semi-circulaire ayant des premier et deuxième côtés latéraux (4, 5) opposés l'un à l'autre ;
une pièce de serrage supérieure (6) de forme généralement semi-circulaire ayant des troisième et quatrième côtés latéraux (7, 8) opposés l'un à l'autre, dans laquelle le troisième côté latéral (7) est relié de manière pivotante au deuxième côté latéral (5) de la pièce de serrage inférieure (3) de sorte que la pièce de serrage supérieure (6) peut pivoter, relativement à la pièce de serrage inférieure (3), entre une position fermée dans laquelle la pièce de serrage supérieure (6) recouvre la pièce de serrage inférieure (3) pour définir un espace de serrage (9) entre elles, et une position ouverte, dans laquelle la pièce de serrage inférieure (3) est découverte par la pièce de serrage supérieure (6), la pièce de serrage supérieure (6) ayant en outre un bord de crochet opposé (10) faisant saillie vers l'extérieur à partir du quatrième côté latéral (8) ;
une barre de torsion (11) ayant une première extrémité (12) pivotée vers le premier côté latéral (4) de la pièce de serrage inférieure (3) ;
un élément de traction (13) ayant une première extrémité de traction (14) pivotant sur la barre de torsion (11) adjacente à la première extrémité (12) de celle-ci et une deuxième extrémité de traction (15) qui est opposée à la première extrémité de traction (14) et qui définit un trou traversant fileté (18), l'élément de traction (13) comprenant une vis filetée (20) disposée de manière filetée et mobile dans le trou traversant fileté (18) ; et
un crochet (16) disposé sur la deuxième extrémité de traction (15) de l'élément de traction (13) et associé de manière opérationnelle de manière à être mobile avec le boulon fileté (20) de manière à engager le crochet (16) avec le bord de crochet opposé (10) de la pièce de serrage supérieure (6) lorsque la pièce de serrage supérieure (6) est disposée en position fermée, empêchant ainsi la pièce de serrage supérieure (6) de pivoter de nouveau en position ouverte,
**caractérisé en ce que** la deuxième extrémité de traction (15) de l'élément de traction (13) définit trois trous traversants filetés (18) recevant respectivement trois boulons filetés (20), chacun des boulons filetés (20) ayant une tête de boulon (25),
et **en ce que** trois écrous filetés (24) respectivement sont fixés par filetage aux boulons filetés (20) tandis que le crochet (16) définit trois passages de tuyau (19) respectivement gainés autour des boulons filetés correspondants (20) de telle sorte que le crochet (16) est fixé entre des paires adjacentes des têtes de boulons (25) et les écrous filetés (24), empêchant ainsi l'oscillation du crochet (16) par rapport aux boulons filetés (20) et assurant un engagement supplémentaire du crochet (16) par rapport aux boulons filetés (20).

2. Fixation réglable (1) selon la revendication 1, **caractérisée en ce qu'**un siège inférieur (21) avec des filets extérieurs (22) s'étend vers le bas à partir de la pièce de serrage inférieure (3) pour la fixation sur une fondation fixe.

3. Fixation réglable (1) selon la revendication 1, **caractérisée en ce que** des coussins inférieurs et supérieurs (23) sont configurés pour être montés sur les surfaces intérieures des pièces de serrage inférieures et supérieures (3, 6).

4. Fixation réglable (1) selon la revendication 1, **caractérisée en ce qu'**une charnière est prévue pour relier de manière pivotante le troisième côté latéral (7) de la pièce de serrage supérieure (6) au deuxième côté latéral (5) de la pièce de serrage inférieure (3), ou pour relier de manière pivotante la première extrémité de l'élément de traction (12) de la barre de torsion (11) au premier côté latéral (4) de la pièce de serrage inférieure (3) ou pour relier de façon pivotante la première extrémité (14) de traction (13) à la barre de torsion (11), adjacente à sa première extrémité (12).

5. Fixation réglable (1) selon la revendication 1, **caractérisée en ce que** l'élément de traction (13) est généralement en forme de L et s'étend vers la pièce de serrage supérieure (6) lorsqu'il est en position fermée, la barre de couple (11) ayant une première section de tige étant pliée à 90 degrés dans une première direction et une deuxième section de tige étant pliée à 90 degrés dans une deuxième direction opposée à la première direction.
